(19) **Europäisches Patentamt / European Patent Office / Office européen des brevets**

(11) **EP 2 444 462 A1**

(12) # EUROPEAN PATENT APPLICATION
published in accordance with Art. 153(4) EPC

(43) Date of publication:
**25.04.2012 Bulletin 2012/17**

(21) Application number: **10789195.4**

(22) Date of filing: **10.06.2010**

(51) Int Cl.:
**C09D 11/00** (2006.01) **H01B 1/22** (2006.01)
**H01B 13/00** (2006.01)

(86) International application number:
**PCT/JP2010/003882**

(87) International publication number:
**WO 2010/146812 (23.12.2010 Gazette 2010/51)**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **16.06.2009 JP 2009143206**

(71) Applicant: **Bando Chemical Industries, Ltd.
Kobe-shi, Hyogo 650-0047 (JP)**

(72) Inventors:
• **YAMADA, Mitsuru**
  **Kobe-shi**
  **Hyogo 650-0047 (JP)**

• **TAKESUE, Masafumi**
  **Kobe-shi**
  **Hyogo 650-0047 (JP)**
• **TOMURA, Takuya**
  **Kobe-shi**
  **Hyogo 650-0047 (JP)**

(74) Representative: **Gill, Stephen Charles
Mewburn Ellis LLP
33 Gutter Lane
London
EC2V 8AS (GB)**

(54) **ELECTRICALLY CONDUCTIVE INK AND PROCESS FOR PRODUCTION OF BASE MATERIAL HAVING ELECTRICALLY CONDUCTIVE COATING FILM ATTACHED THERETO USING SAME**

(57) Disclosed is an electrically conductive ink which has dispersibility, excellent low-temperature burning properties and dispersion stability, and enables the production of an electrically conductive coating film having electrical conductivity and excellent resolubility. The electrically conductive ink comprises: a metal colloid solution containing metal particles; and a stabilizing agent which is dispersed in the metal colloid solution and comprises an amine compound having at least one amino group.

EP 2 444 462 A1

**Description**

**Technical Field**

The present invention relates to electrically conductive ink and a method for producing a base material having an electrically conductive coating film using this electrically conductive ink. In further detail, the present invention relates to electrically conductive ink for forming an electrically conductive coating film, which is, for example, used as a lead of a solar cell panel or various circuit boards, and a base material with an electrically conductive coating film that is formed by applying and baking the electrically conductive ink on a base material, and that can be used as the solar cell panel or various circuit boards.

**Background Technology**

Conventionally, the electrically conductive ink is used, for example, as an electrically conductive material for the purpose of forming a solar cell panel lead, an electrode of a flat panel display, a circuit board or an IC card lead.
Herein, for example, in Patent Literature 1, intending to provide an electrically conductive film that has high transparency, which is suitable for a cathode-ray tube, and that excels in electrical conductivity, especially excels in an electromagnetic shielding property with a low surface resistance value; to be specific, to provide a clear conductive film where its surface resistance value is $10^3$ $\Omega/m^2$, and that can be mass-produced at low cost, there is proposed liquid silver colloid characterized by 1 nm to 100 nm of particle size of silver, 1 % to 80 % by weight of a silver solid content concentration, and excelling in storage stability.
Further, for example, in Patent Literature 2, intending to provide metal colloid particles that excel in dispersing stability even at high concentration and its producing method, there is proposed a method for producing metal colloid particles characterized by adhering mercapto carboxylic acid on surfaces of metal colloid particles and then further adhering a mercapto carboxylic acid ester.
In addition, for example, in Patent Literature 3, intending to provide a low-temperature sintering type electrically conductive metal nano particle paste for high-density circuit printing, which can achieve surface configuration on the occasion of applying baking onto a substrate and can be used for forming a low-resistant and minute circuit, there is proposed an electrically conductive metal nano particle paste which is obtained by forming a surface coating layer of an amine compound or the like for coating the surfaces over metal nano particles with 100 nm or less of average particle size, and uniformly dispersing the particles in a dispersing solvent containing one or more types of organic solvents, which can elute and separate coating particles such as an amine compound, on the occasion of heating.

**Prior Art**

**Patent Literature**

Patent Literature 1: Japanese Patent Application Laid-Open No. H10-66861
Patent Literature 2: Japanese Patent Application Laid-Open No. 2005-179754
Patent Literature 3: Japanese Patent Application Laid-Open No. 2004-273205

**Summary of the Invention**

**Problem to be Solved by the Invention**

However, when the electrically conductive ink containing liquid silver colloid described in the Patent Literature 1 is used as a material for an electrically conductive coating film, it is necessary to heat and bake the applied liquid silver colloid at a temperature of 200 °C or higher in order to obtain an electrically conductive coating film having practically-sufficient electrical conductivity, and on that occasion, there is a problem that a substrate and/or parts that are mounted to the substrate may become deteriorated (a problem of baking at high temperature).
Further, although the metal colloid particles and the electrically conductive nano particle paste described in the Patent Literature 2 and the Patent Literature 3 have excellent dispersibility of metal (colloid) particles in a liquid, it is necessary to heat and bake the coated metal colloid particles and the electrically conductive nano particle paste at a temperature of 200 °C or higher (a problem of baking at high temperature) in order to obtain the conductive coating having practically-sufficiently conductivity, as similar to the silver colloid liquid described in the Patent Literature 1.
In addition, in the case of printing using the silver colloid liquid, the metal colloid particles and the electrically conductive nano particle paste described in the Patent Literature 1, Patent Literature 2 and Patent Literature 3, respectively, clogging of a screen plate, clogging of a flexo plate in flexo printing or clogging of a nozzle in inkjet printing may occur, and there is still room for improvement in printability. Further, because the clogged silver colloid liquid, metal colloid particles and electrically conductive nano particle paste may be firmly stuck, it is difficult to remove them even if they are washed, and there is yet another room for improvement in washability. In other words, there is a problem where they have inferior work efficiency at the time of maintenance (a problem of resolution).

Then, the present invention has been accomplished by taking the problems in the prior art into consideration, and the objective is to provide electrically conductive ink that can be used for forming an electrically conductive coating film having sufficient electrical conductivity even if the electrically conductive ink is baked by heating at lower temperature than that for the conventional electrically conductive ink, and, that excels in dispersing stability and re-solubility, as well. In other words, the objective of the present invention is to provide electrically conductive ink that has the same level or greater dispersibility compared to the conventional one, and, has superior baking property at low temperature, dispersing stability and re-solubility, and in addition, that can be used for forming an electrically conductive coating film having the same level or greater of electrical conductivity compared to the conventional one. In addition, the objective of the present invention is to provide a base material having an electrically conductive coating film including an electrically conductive coating film having superior conductivity.

**Means for Solving the Problem**

The inventors of the present invention, as a result of devoting themselves to researching in order to accomplish the objective, discovered that it is extremely effective to disperse an amine compound having one or more amino group (s) in a metal colloid liquid constituting the electrically conductive ink, in order to obtain the electrically conductive ink that has the same level or greater dispersibility compared to the conventional one and superior low-temperature baking property, dispersing stability and re-solubility, and in addition, that can be used for forming an electrically conductive coating film having the same level or greater conductivity than the conventional one.

Namely, the present invention provides electrically conductive ink containing:

a metal colloid liquid comprising metal particles and organic constituents, the organic constituents containing a hydrophilic group and a metal-adsorbing group and being at least partially localized on surfaces of the metal particles due to the metal-adsorbing group; and
a stabilizer comprising an amino compound having one or more amino groups and being dispersed in the metal colloid liquid.

The electrically conductive ink of the present invention contains an amine compound that has one or more amino groups in the metal colloid liquid (in other words, in a dispersion medium of the electrically conductive ink) as a stabilizer, and that excels in affinity to water. Consequently, the amine compound interacts with a hydrophilic group out of the organic constituents at least partially localized on the surfaces of the metallic particles, and can disperse the metallic particles in the metal colloid to be approximately uniform and throughout a long term, and it is believed that this results in improvement of the dispersibility and dispersing stability.

Then, since the electrically conductive ink of the present invention excels in the dispersibility, dispersing stability and re-solubility due to the interaction with a stabilizer, while the dispersion state of the metallic particles is maintained excellently, the electrically conductive ink can be applied onto a substrate. Therefore, it is believed that even if the coated electrically conductive ink is baked at comparatively low temperature, an electrically conductive coating film with excellent conductivity can be obtained, and such conductive coating exhibits sufficient electrical conductivity since a dispersion state of the metallic particles is excellent.

Furthermore, "dispersibility" in the present invention indicates whether or not the dispersion state of the metallic particles in the metal colloid liquid is excellent (is uniform) immediately after the metal colloid liquid is prepared, and "dispersing stability" indicates whether or not the dispersion state of the metallic particles in the metal colloid liquid is maintained after a predetermined time has passed from the preparation of the metal colloid liquid, and this is also referred to as "low sedimentation aggregability".

Herein, in the metal colloid liquid constituting the electrically conductive ink of the present invention, "localization" out of "organic constituents at least partially localized on the surfaces of the metallic particles" means that a hydrophilic group out of the organic constituents is orientated toward the dispersion medium side and the metal-adsorbing group out of the organic constituents is adsorbed onto the surfaces of the metallic particles, so that a so-called micellar structure is at least partially formed and the metal colloid liquid is constituted as a whole. Further, "stabilizer containing an amine compound having one or more amino groups" is dispersed at least in a metal colloid liquid, to be more specific, in a dispersion medium constituting the metal colloid liquid, and as a rule, it is not coated on the metallic particles by adhesion.

It is preferable that the electrically conductive ink of the present invention contains the amine compound at between 0.2 % by weight and 60 % by weight of a solid content of the metal colloid liquid. In the electrically conductive ink of the present invention, if the content of the amine compound is 0.2 % or greater by weight of the solid content in the metal colloid liquid, it is preferable because the dispersibility, the dispersing stability and the re-solubility of the electrically conductive ink can become sufficient. In the meantime, when the content of the amine compound is 60 % or less by weight of the solid content in the metal colloid liquid, it is preferable because the electrical conductivity of an electrically conductive coating film, which is formed by baking the electrically conductive ink by heating, can become sufficient. From a viewpoint to more certainly obtain the effect of the present invention, it is more preferable that the content of the amine compound is between 0.5 % by weight and 50 % by weight of the solid content in the metal colloid liquid.

In particular, when alkanolamine is used as the amine compound, it is more preferable that the content of the amine compound (alkanolamine) is between 0.5 % by weight and 12 % by weight of the solid content in the metal colloid liquid. This is because a hydroxyl group contained in a molecular structure of alkanolamine excels in compatibility with water, and alkanolamine preferably acts on as a stabilizer of the metal colloid liquid with this range.

Herein, "solid content" of the metal colloid liquid in the present invention is a residual solid content after a dispersion medium is removed from the metal colloid liquid using a silica gel or the like, and then, for example, a residue is dried for 24 hours at aan ordinary temperature of 30 °C or lower (for example, 25 °C). This solid content normally contains metallic particles, residual organic constituents, residual reducing agent and the like. Furthermore, as a method to remove the dispersion medium from the metal colloid liquid using a silica gel, it is possible to adopt various methods, and for example, the dispersion medium should be removed by applying a metal colloid liquid onto a glass substrate and by leaving the coated glass substrate in a sealed container with a silica gel for 24 hours or longer.

Further, in the electrically conductive ink of the present invention, the amine compound preferably contains N-aminoethylethanolamine, diglycolamine, N-methyldiethanolamine, diethanolamine, N-butyldiethanolamine, 4-aminomethylpyridine, γ-butyrolactone, 2,2'-methyliminodiethanol, 3-morpholinopropylamine, 2-(1-piperazinyl)ethylamine, 2-pyridinecarbaldehyde, γ-valerolactone, 2-(isopenthyloxy)ethanol, N,N-diethylethanolamine, triethylenetetramine, 1-dimethylamino-2-propanol, tripropylene glycol, 2-dimethylaminoethanol, triisopropanolamine, 3-ethoxypropylamine, ethylenediamine, 2-(dimethylamino)ethyl methacrylate, pentylamine, isopropanolamine, diethylmethylamine, triethylamine, N-methylpiperidine, piperazine, pyrrolidine, diethylaminoethanol, triethanolamine, dimethylaminopropanol, monoethanolamine, 2-(methylamino)ethanol, n-propanolamine, 2-amino-2-methyl-1-propanol, diethylamine, 2-amino-2-methyl-1-propanol, 2-diethylaminoethanol, 2-dimethylaminoisopropanol, 3-diethylamino-1-propanol, 2-dimethylamino-2-methyl-1-propanol, 4-dimethylamino-1-butanol, aminocyclohexane or 3-(dimethylamino)-1-propanol.

If any one of the amine compounds above is used as the amine compound that has one or more amine groups and excels in affinity to water, because the amine compound more certainly interacts with a hydrophilic group out of the organic constituents at least partially localized on the surfaces of the metallic particles, the metallic particles can be dispersed in the metal colloid to be approximately uniform and throughout a long term; therefore, the dispersibility, the dispersing stability and the re-solubility can be more certainly improved. Then, the electrically conductive ink can be applied to a base material while the dispersion state of the metallic particles is excellently maintained; therefore, an electrically conductive coating film having sufficient electrical conductivity can be more certainly obtained.

Further, for the electrically conductive ink of the present invention, it is preferable that the hydrophilic group out of the organic constituents is a carboxyl group, and the metal-adsorbing group is a group containing a sulfur atom. According to such constitution, the micellar structure is more certainly formed by more absolutely adsorbing the metal-adsorbing group with metallic particles and by positioning the hydrophilic group more steadily at the dispersion medium side, and it is preferable because the electrically conductive ink that excels in the dispersibility, the dispersing stability and the re-solubility can be more certainly obtained.

Further, in the electrically conductive ink of the present invention, it is preferable that the metal colloid liquid is a gold colloid liquid. According to such constitution, because this excels in electrical conductivity and gold has superior antioxidative property and anti-migration property, an electrically conductive coating film that excels in durability can be more certainly obtained.

When the metal colloid liquid is a gold colloid liquid, it is preferable that the amine compound contains alkanolamine, i.e., N-aminoethylethanolamine, diglycolamine, N-methyldiethanolamine, N,N- diethylethanolamine, 1-dimethylamino-2-propanol, 2-dimethylaminoethanol or isopropanolamine, or contains 3-morpholino propylamine. According to such constitution, even metallic particles with comparatively great specific gravity can be more absolutely dispersed in the metal colloid liquid to be approximately uniform and throughout a long term.

Further, the present invention provides a method for producing a base material having an electrically conductive coating film, including: a base material, and an electrically conductive coating film at least partially formed on a surface of the base material, comprising:

an electrically conductive ink application step of applying the above-mentioned electrically conductive ink onto a base material; and

an electrically conductive coating film forming step of baking the electrically conductive ink applied onto the base material at a temperature of 300 °C or lower to form an electrically conductive coating film.

The inventors of the present invention, as a result of further keen study and examination, discovered that if the electrically conductive ink comprising: a metal colloid liquid comprising metal particles and organic constituents, the organic constituents containing a hydrophilic group and a metal-adsorbing group and being at least partially localized on surfaces of the metal particles due to the metal-adsorbing group; and a stabilizer comprising an amino compound having one or more amino groups and being dispersed in the metal colloid liquid, is used as electrically conductive ink in the electrically conductive ink application step, even though the electrically conductive ink applied onto the base material in the electrically conductive coating film forming step is baked at a temperature of 300 °C or lower, an electrically conductive coating film having superior electrical conductivity can be more certainly obtained.

Herein, "applied onto a base material" in "an electrically conductive ink application step of applying the electrically conductive ink onto the base material" of the present invention is a concept including a case of applying the electrically conductive ink planarly and another case of applying (drawing) the ink linearly, as well. Therefore, the conductive coating film in the present invention is a concept including both a planar conductive coating film and a linear conductive coating film, and these planar conductive coating film and linear conductive coating film may be continuous or discontinuous, and those may contain both a continuous portion and a discontinuous portion.

Further, according to the method for producing a base material with an electrically conductive coating film of the present invention, an electrically conductive coating film that excels in electrical conductivity can be obtained even if the electrically conductive coating film is formed by baking the electrically conductive ink applied onto the base material at a temperature of less than 200 °C in the electrically conductive coating film forming step.

**Effect of the Invention**

According to the present invention, the electrically conductive ink that can be used for forming an electrically conductive coating film having sufficient electrical conductivity even if the electrically conductive ink is heated and baked at lower temperature than that for the conventional electrically conductive ink, and in addition, that excels in dispersing stability and re-solubility can be provided. In other words, according to the present invention, the electrically conductive ink that has the same level or greater dispersibility compared to the conventional one, and, that has superior low-temperature baking property, dispersing stability and re-solubility, and in addition, that can be used for forming an electrically conductive coating film having the same level or greater conductivity compared to the conventional one can be provided.

**BEST MODE FOR CARRYING OUT THE INVENTION**

Hereafter, a preferred embodiment of the electrically conductive ink of the present invention, and, another preferred embodiment of the method for producing a base material having an electrically conductive coating film using the electrically conductive ink of the present invention are explained in detail. Furthermore, any redundant explanations may be omitted in the explanation below.

[Electrically conductive ink]

First, a preferred embodiment of the electrically conductive ink of the present invention is explained. The electrically conductive ink of the present embodiment mainly contains a metal colloid liquid and a stabilizer. Then, the metal colloid liquid of the present embodiment contains metallic particles and organic constituents, which contain a hydrophilic group and a metal-adsorbing group, and which are at least localized on surfaces of the metallic particles, and the stabilizer of the present embodiment is dispersed in the metal colloid liquid, and contains an amino compound that contains one or more amino groups.

Because of having such constitution, the electrically conductive ink of the present embodiment can be used for forming an electrically conductive coating film that has sufficient electrical conductivity even if the electrically conductive ink is heated and baked at lower temperature than that for the conventional electrically conductive ink, and in addition, that excels in dispersing stability and re-solubility. According to the electrically conductive ink of the present embodiment, a base material having an electrically conductive coating film including an electrically conductive coating film having superior conductivity can be formed. Furthermore, as a dispersion medium constituting a metal colloid liquid in the electrically conductive ink of the present embodiment, to be described later, water and organic dispersion media can be exemplified.

Herein, as the conventional electrically conductive ink, there is electrically conductive ink having excellent dispersibility of metallic (colloid) particles (for example, silver colloid liquid), but in order to have practically sufficient electrical conductivity, it is necessary to heat and bake the electrically conductive ink after application at a temperature of 200 °C or greater, and it may cause some deterioration of a base material and/or parts mounted to the base material on that occasion. Further, the conventional electrically conductive ink has inferior re-solubility, and when clogging occurs, it may cause printing or cleaning to be difficult or it may cause an inferior maintenance property. In addition, the conventional electrically conductive ink may have inferior dispersibility throughout a long term, i.e., dispersing stability (low sedimentation aggregability).

In the meantime, since the electrically conductive ink of the present embodiment contains a stabilizer containing an amine compound that has one or more amino groups and excels in affinity to water, the amine compound interacts with a hydrophilic group out of organic constituents at least partially localized on surfaces of the metallic particles, and the metallic particles in the metal colloid can be dispersed to be approximately uniform and throughout a long term, and it is believed that the electrically conductive ink has superior dispersibility, dispersing stability and re-solubility due to these characteristics. Further, because the electrically conductive ink of the present embodiment excels in the dispersibility and the dispersing stability, while a dispersion state of the metallic particles is maintained to be excellent, the electrically conductive ink can be applied onto a base material; therefore, an electrically conductive coating film where the dispersion state of the metallic particles is still excellent even if the electrically conductive ink is baked at comparatively low temperature can be obtained, and an electrically conductive coating film with excellent conductivity can be obtained.

For example, the inventors of the present invention have confirmed that the dispersing stability of the electrically conductive ink of the present embodiment (to be more specific, electrically conductive ink of examples to be described later) is more excellent than that of the conventional electrically conductive ink, according to whether or not there is segmentation visually, and with using a measurement of particle diameter of the metallic particles by a dynamic light scattering type particle size distribution meter. Further, the inventors of the present invention have confirmed that an electrically conductive coating film formed by using the electrically conductive ink of the present embodiment (to be specific, electrically conductive ink of examples to be described later) excels in low-temperature baking property, conductivity and re-solubility compared to those of the conventional electrically conductive ink according to a measurement of volume resistance values using a direct current accurate measuring instrument (mobile double bridge 2769 manufactured by Yokogawa Meters & Instruments Corporation) and a visual observation by dripping ion exchange water.

It is preferable that the electrically conductive ink of the present embodiment contains an amine compound at between 0.2 % by weight and 60 % by weight of a solid content in the metal colloid liquid. If the content of the amine compound is 0.2 % or greater by weight of the solid content in the metal colloid liquid, this is preferable because the dispersibility, the dispersing stability and the re-solubility of the electrically conductive ink can become sufficient. In the meantime, if the content of the amine compound is 60 % or less by weight of the solid content in the metal colloid liquid, this is preferable because the conductivity of an electrically conductive coating film to be formed by heating and baking the electrically conductive ink can become sufficient.

From a viewpoint to more certainly obtain an effect of the present invention, it is more preferable that the content of the amine compound is between 0.5 % by weight and 50 % by weight of the solid content of the metal colloid. When alkanolamine is used as the amine compound, it is more preferable that the content of the amine compound (alkanolamine) is between 0.5 % by weight and 12 % by weight of the solid content of the metal colloid liquid. This is because the hydroxyl group contained in a molecular structure of alkanolamine excels in compatibility with water and alkanolamine preferably acts on as a stabilizer of the metal colloid liquid.

Herein, "solid content" in the metal colloid liquid of the present embodiment is a solid content that remains after a dispersion medium is removed by applying the metal colloid liquid onto a glass substrate and by leaving the coated glass substrate at an ordinary temperature of 30 °C or less (for example, 25 °C) in a sealed container with a silica gel for 24 hours or longer.

[Metal colloid liquid]

Next, the metal colloid liquid constituting the electrically conductive ink of the present embodiment is explained. As this metal colloid liquid, various metal colloid liquids containing metallic particles and organic constituents that contain a hydrophilic group and a metal-adsorbing group, and that are at least partially localized on surfaces of the metallic particles due to the metal-adsorbing group can be used.

The metal constituting the metallic particles is not particularly limited, but for example, gold, silver, copper, platinum, palladium, rhodium, ruthenium, iridium and osmium can be exemplified. Among them, gold, silver, copper and platinum are preferable, and gold and silver are more preferable. Then, one type of metal may be used and two or more types of metal can be combined.

Herein, although silver has high electrical conductivity, because it may cause migration, when silver is used, it is preferable to combine with another metal. As metal to be combined with, for example, gold, copper, platinum, palladium, rhodium, ruthenium, iridium and osmium are exemplified, and among them, gold, platinum and palladium are preferable. As a method for combining them, alloy particles containing a plurality of metals are used, or metallic particles having a core-shell structure (a core and a shell constitute different metal, respectively) or a multilayer structure (having a layer constituting at least two different types of metals) are used.

As the metal constituting the metallic particle, the further preferable one is gold. Since gold has superior antioxidative property and anti-migration property, an electrically conductive coating film excelling in durability can be more certainly obtained. Needless to say, gold can be combined with silver, or it can be used singularly.

It is preferable that the average particle size of particles (including the metallic particles) in the metal colloid liquid of the present embodiment is 100 nm or less, and it is further preferable that it is 5 nm to 80 nm. If the average particle size of the particle is 100 nm or less, it is difficult for the particles to agglutinate, and it tends not to impair the dispersing stability. In the meantime, if the average particle size of the particles is 5 nm or greater, for example, a purification process of the metallic particles is easy to be carried out and it is preferable from a viewpoint of production process. Furthermore, even in "electrically conductive ink" to be obtained by using the metal colloid liquid of the present embodiment, the average particle size (median size) of the particles (including the metallic particles) is roughly the same as this range (can be approximated).

Furthermore, the particle size of the particles in the metallic particles may vary depending on solid content concentration, and it is not always constant. Further, when the electrically conductive ink contains, as described below, a resin component, an organic solvent, a thickener or a surface tension conditioner as optional components, a particle component(s) exceeding 100 nm of the average particle size may be contained. In this case, the electrically conductive ink may contain a particle component(s) having 100 nm or greater of average particle size if the component(s) does not cause sedimentation; in other words, the electrically conductive ink may contain a particle component(s) having 100 nm or greater of average particle size if the scope (such as components or quantity) does not impair any effects of the present invention.

Herein, the average particle size of the particles in the metal colloid liquid is measured with a dynamic light scattering method (Doppler scattering light analysis), and for example, this can be expressed with a median diameter ($D_{50}$) based upon volume measured with a dynamic light scattering type particle size distribution meter: LB-550 manufactured by HORIBA, Ltd.

Specifically, first, several drops of the metal colloid liquid is instilled into 10 ml of pure water, and the mixture is shaken by hand and a measurement sample is prepared. Next, 3 ml of the measurement sample is poured into a cell of the dynamic light scattering type particle size distribution meter: LB-550 manufactured by HORIBA, Ltd. and a measurement is conducted under the conditions below.

- Measurement conditions
  Number of data reading times: 100 times
  Temperature within cell holder: 25 °C
- Display conditions
  Distribution mode: standard
  Number of repeats: 50 times
  Particle size standard: volume standard
  Refraction index of dispersed material: 0.340 - 3.300i (in the case of gold)
  Refraction index of dispersion medium: 1.33 (when water is a main component)
- System condition setting
  Intensity standard: dynamic
  Upper limit of scattering intensity range: 10,000.00
  Lower limit of scattering intensity range: 1.00

The organic constituents of the present embodiment should be the one that contain at least one hydrophilic group and one metal-adsorbing group, respectively, and that has affinity to water, and that can be adsorbed to the metallic particles in the metal colloid liquid and can form a micellar structure, and it is not particularly limited. As an affinity group for water, for example, a carboxyl group, an amine group and a hydroxyl group are exemplified, and as a metal-adsorbing group, for example, a functional group containing a sulfur atom such as a thiol group or disulfide, a functional group containing a nitrogen atom such as an amino group or an imino group, a phosphate group, a hydroxyl group and a carboxyl group are exemplified. As the metal-adsorbing group, a thiol group having strong metallic adsorptive power is preferable.

As a specific example of the organic constituent, for example, mercaptopropionic acid, trisodium citrate and monoethanolamine are exemplified, and among them, an organic constituent having: a carboxyl group (COOH) expressed with SH-Cn-COOH (n is 1 or greater) having, for example, an affinity group to water; and a thiol group (SH) as a metal-adsorbing group, and having affinity to water. For example, mercaptopropionic acid, mercaptoacetic acid, mercaptobenzoic acid, mercaptocinnamic acid , mercaptopropanesulfonic acid , mercaptosuccinic acid and their salts can be exemplified.

As a content of the organic constituent in the metal colloid liquid, the range where a micellar structure can be formed can be selected accordingly, and from the viewpoint to enable more certain obtainment of the effect of the present invention, it is preferable that the content is, for example, 0.5 % by weight to 15 % by weight of the metal colloid liquid. In particular, when the organic constituent is a mercapto compound, the content is 1 % by weight to 10 % by weight. Furthermore, the content of the organic constituent in the metal colloid liquid can be measured using a thermogravimetric method (weight reduction method). Specifically, for example, as in examples to be described later, the solid content in the gold colloid liquid is heated at a temperature-increasing rate of 10 °C/min, and the content of the organic constituent can be specified as a weight reduction at 100 °C to 500 °C.

Next, the metal colloid liquid containing the metallic particles and the organic constituent as mentioned above can be prepared by reducing a raw material solution containing a metallic metal salt constituting the metallic particles, the organic constituents and a dispersion medium. Due to this reduction, the organic constituent is at least partially localized on the surfaces of the metallic particles and a desired metal colloid can be obtained. The amine compound to be described later may be mixed into this raw material solution, but it is preferable to mix a prepared metal colloid liquid in order not to interrupt the generation of the metal colloid liquid by reacting with metal salt and/or the organic constituent.

Therefore, the dispersion medium contained in the raw material solution for preparing the metal colloid liquid of the present embodiment is aqueous, and for example, water or an aqueous dispersion medium comprising a mixture of water and an aqueous organic dispersion medium can be used. As the aqueous organic dispersion medium, there is no particular restriction as long as it does not impair any effects of the present invention, and for example, an aqueous organic solvent to be described as an optional component of the electrically conductive ink is usable, and when it is used by mixing with water, it is preferable to use 75 % or less by volume of organic dispersion medium.

As the metal salt, known metal salts and their hydrates used for preparation of the metal colloid liquid, and for example, chlorauric acid, gold chloride, gold bromide, gold cyanide, gold hydroxide, gold iodide, silver nitrate, silver acetate, silver perchlorate, chloroplatinic acid, potassium chloroplatinate, palladium chloride, palladium nitrate, rhodium nitrate, rhodium acetate, ruthenium acetate, hexanitroiridate and osmium oxide are exemplified. Further, a method to reduce these metal salts in the raw material solution is not particularly limited, and for example, a method using a reducing agent and another method by irradiating a light, such as ultraviolet rays, electron beams, ultrasonic waves or thermal energy, are exemplified. Among them, from the viewpoint of easy operation, the method using a reducing agent is preferable.

In the method using a reducing agent, for example, a hydrogen compound, such as sodium borohydride; an amine compound, such as hydrazine; an oxide, such as sulfurous acid; hydroxy acid salt, such as trisodium citrate or sodium glycolate; metal salt, such as ferrous sulfate or iron oxide; and an organic compound, such as hydroquinone, tannic acid or salicylic acid can be exemplified. In particular, the hydrogen compound, such as sodium borohydride, is preferable because its reduction efficiency with regard to a usage is high. Further, these reducing agents can be used singularly or two or more types can be combined. An amount of the reducing agent should be selected accordingly, within a range, which is sufficient to reduce metal salt and does not excessively remain in the metal colloid liquid. Furthermore, the reducing agent can be used together with a light, electron beams, ultrasound waves or thermal energy.

[Stabilizer: amine compound]

Next, "amine compound having one or more amino groups", which is a stabilizer in the electrically conductive ink of the present embodiment, should be the one that is dispersed at least in the metal colloid liquid, to be more specific, in a dispersion medium constituting the metal colloid liquid, and that interacts with a hydrophilic group out of organic constituents at least partially localized on surfaces of metallic particles, and that can disperse the metallic particles in the metal colloid to be approximately uniform and throughout a long term.

This amine compound is a compound having at least one type of group to be selected from a group constituting a primary amino group, a secondary group and a tertiary amino group, and as a rule, the amine compound does not coat the metallic particles by adhesion, but it can be partially adhered onto the surfaces of the metallic particles without impairing the effects of the invention.

As such amine compound, for example, N-aminoethylethanolamine, diglycolamine, N-methyldiethanolamine, diethanolamine, N-butyldiethanalamine, 4-aminomethylpyridine, γ-butyrolactone, 2,2'-methyliminodiethanol, 3-morpholinopropylamine, 2-(1-piperazinyl)ethylamine, 2-pyridinecarbaldehyde, γ-valerolactone, 2-(isopenthyloxy)ethanol, N,N-diethylethanolamine, triethylenetetramine, 1-dimethylamino-2-propanol, tripropylene glycol, 2-dimethylaminoethanol, triisopropanolamine, 3-ethoxypropylamine, ethylenediamine, 2-(dimethylamino)ethyl methacrylate, pentylamine, isopropanolamine, diethylmethylamine, triethylamine, N-methylpiperidine, piperazine, pyrrolidine, diethylaminoethanol, triethanolamine, dimethylaminopropanol, monoethanolamine, 2-(methylamino)ethanol, n-propanolamine, 2-amino-2-methyl-1-propanol, diethylamine, 2-amino-2-methyl-1-propanol, 2-diethylaminoethanol, 2-dimethylaminoisopropanol, 3-diethylamino-1-propanol, 2-dimethylamino-2-methyl-1-propanol, 4-dimethylamino-1-butanol, aminocyclohexane and 3-(dimethylamino)-1-propanol are exemplified.

If any one of these amine compounds is used, as described above, that amine compound more absolutely interacts with a hydrophilic group out of the organic constituents at least partially localized on surfaces of the metallic particles; the metallic particles in the metal colloid liquid can be dispersed to be approximately uniform and throughout a long term; and the dispersibility, the dispersing stability and the re-solubility of the electrically conductive ink of the present embodiment can be more certainly improved. Then, the electrically conductive ink can be applied onto a base material while the dispersion state of the metallic particles is excellently maintained; therefore, even if the electrically conductive ink is baked at comparatively low temperature, an excellent conductive coating where the dispersion state of the metallic particles can be more certainly obtained as is, and, an electrically conductive coating film having sufficient electrical conductivity can be obtained.

When the metal colloid liquid is a colloidal gold liquid, as the amine compound, one containing alkanolamine, such as N-aminoethylethanolamine, diglycolamine, N-methyldiethanolamine, N,N-diethylethanolamine, 1-dimethylamino-2-propanol, 2-dimethylaminoethanol or isopropanolamine or 3-morpholinopropylamine is preferable. In such constitution, even if the metallic particles have comparatively great specific gravity, they can be more certainly dispersed in the metal colloid liquid roughly uniformly and throughout a long term.

In the electrically conductive ink of the present embodiment to be obtained by mixing the metal colloid liquid and the amine compound, without impairing the effect of the present invention, for example, in order to add a function, such as an adhesion property, a drying characteristic or a printing property, for example, a resin component that plays a role as a binder, an organic solvent, a thickener or a surface tension conditioner may be added.

As such resin component, for example, polyester resin, polyurethane resin, such as blocked isocyanate, polyacrylate resin, polyacrylamide resin, polyether resin and melamine resin can be exemplified, and an aqueous resin is preferable among them. Further, these can be used singularly, respectively, and two or more can be combined.

As the organic solvent, an aqueous solvent is preferable, and for example, methyl alcohol, ethyl alcohol, n-propyl alcohol, 2-propyl alcohol, 1,3-propanediol, 1,2-propanediol, 1,4-butanediol, 1,2,6-hexanetriol, 1-ethoxy-2-propanol, 2-butoxyethanol, ethylene glycol, diethylene glycol, triethylene glycol, polyethylene glycol with weight-average molecular weight between 200 and 1,000, propylene glycol, dipropylene glycol, tripropylene glycol, polypropylene glycol with weight-average molecular weight between 300 and 1,000, N,N-dimethylformamide, dimethylsulfoxide, N-methyl-2-pyrrolidone, N,N-dimethylacetamide, glycerin and acetone are exemplified, and these can be used singularly, respectively, and two or more can be combined.

As the thickener, for example, a clay mineral, such as clay, bentonite or hectorite; and for example, emulsion, such as polyester emulsion resin, acrylic emulsion resin, polyurethane emulsion resin or blocked isocyanate, are exemplified, and these can be used singularly, respectively, and two or more types can be combined. Further, as the surface tension conditioner, there is no restriction as long as having a surface-activating ability.

[Method for producing electrically conductive coating film (base material having electrically conductive coating film)]

Next, a method for producing the electrically conductive coating of the present embodiment (base material having an electrically conductive coating film) mainly includes (a) an electrically conductive ink preparing step, (b) an electrically conductive ink application step and (c) an electrically conductive coating film forming step. Then, in the method for producing the electrically conductive coating film (base material having an electrically conductive coating film) of the present embodiment, the electrically conductive ink of the present embodiment described above is used in the electrically conductive ink application step, and, the applied electrically conductive ink is baked by heating at a predetermined temperature in the electrically conductive coating film forming step. With these steps, the electrically conductive coating of the present embodiment described above (base material having an electrically conductive coating film) can be more certainly obtained.

Hereafter, each step of the method for producing an electrically conductive coating film (a base material having an electrically conductive coating film) of the present embodiment is explained.

(a) Electrically conductive ink preparing step

The electrically conductive ink preparing step is a step to prepare the electrically conductive ink of the present embodiment described above. The electrically conductive ink is obtained by preparing the metal colloid liquid with the method described above, and by mixing the amine compound and other optional components into this metal colloid liquid. This mixing should be performed with a conventionally known method. Since the electrically conductive ink of the present embodiment excels in the dispersing stability, electrically conductive ink prepared and stored before implementing the method for producing the electrically conductive coating of the present embodiment (the base material having the electrically conductive coating film) can be used, and the one prepared immediately before the implementation can also be used.

(b) Electrically conductive ink application step

The electrically conductive ink application step is a step to apply the electrically conductive ink of the present embodiment described above onto a base material.

Herein, as the base material that is usable in the present embodiment, there is no particular restriction as long as having at least one main surface where the electrically conductive ink can be applied and baked by heating and the coating film can be mounted, and a base material that excels in heat resistance is preferable. Further, as described above, since an electrically conductive coating film with sufficient electrical conductivity can be obtained from the electrically conductive ink of the present embodiment even if heating and baking at comparatively low temperature than that for the conventional electrically conductive ink, it is possible to use a base material with lower heat resistance temperature within the temperature range, which is higher than this low baking temperature.

As a material constituting such base material, for example, polyimide (PI), polyamideimide (PAI), polyethylene terephthalate (PET), polybutylene terephthalate (PBT), polyethylene naphthalate (PEN), polyether sulfone (PES), fluorine resin, liquid crystal polymer, ceramics, glass and metal can be exemplified. Further, the base material can have various shapes, for example, a plate or a strip, and it can be rigid or flexible. The thickness of the base material can be selected accordingly. A base material where a surface layer is formed or another base material where a surface treatment, such as a hydrophilic surface-treatment, is applied, for the purpose of improvement of adhesiveness or adhesion property or other purposes, can be used.

In the process to apply the electrically conductive ink onto a base material, it is possible to use various methods, and for example, a casting method, a dispenser method, an inkjet method, a flexo method, a gravure method, a screen method, a coater method, a spin coating method, a brush coating method and a syringe method can be used.

Further, for the shape of coating film made from the electrically conductive ink after applying and before baking by heating, it is possible to adopt any desired shape; therefore, "application" in the present embodiment is a concept including both a case of applying the electrically conductive ink planarly and another case of applying (drawing) the ink linearly, and the coating film and the electrically conductive coating film of the present embodiment are concepts including both planar and linear coating film and electrically conductive coating film(s). Further, these planar and linear coating film and electrically conductive coating film can be continuous and/or discontinuous, and they can include a continuous portion and a discontinuous portion.

(c) Conductive coating forming process

The coating film applied as described above is baked by heating at 300 °C or lower, and the electrically conductive coating film of the present embodiment (the base material having an electrically conductive coating film) is obtained. In the present embodiment, because the electrically conductive ink of the present embodiment is used as described above, even if the electrically conductive ink is baked at 300 °C or lower of temperature, an electrically conductive coating film having superior conductivity and resolubility can be certainly obtained. Because of this baking, a bond between the metallic particles can be enhanced and baked.

In the present embodiment, when the electrically conductive ink contains a binder component, from the viewpoints to improve the strength of electrically conductive coating film and to improve adhesive power with the base material, the binder component shall also be sintered, but the baking condition is controlled and the binder component can be all removed for the main purpose of adjusting the electrically conductive ink to various printing methods as occasions demand.

The baking temperature in this electrically conductive coating film forming step is 300 °C or lower, preferably 200 °C or lower, further preferably 150 °C or lower. The lower the baking temperature is, the more it becomes possible that a base material with low heat resistance is applied; thus there is an advantage to increase the number of usable base materials. Further, because an amount of energy can be lowered, production cost can be reduced. The lower limit value should be room temperature, and approximately 50 °C is preferable. When the base material is treated at room temperature, because of a possibility of variation, if it is heated to approximately 50 °C of temperature, influences by peripheral temperature and humidity can be lessened, and the quality can be stabilized. As the baking time, for example, 5 minutes to 3 hours are acceptable.

The electrically conductive coating film of the present embodiment (the base material having an electrically conductive coating film) can be obtained as described above. The thickness of the conductive coating of the present embodiment to be obtained as mentioned above is, for example, approximately 0.1 $\mu$m - 5 $\mu$m, and more preferably 0.1 $\mu$m - 1 $\mu$m. When the electrically conductive ink of the present embodiment is used, even if the thickness is approximately 0.1 $\mu$m - 5 $\mu$m, an electrically conductive coating film having sufficient electrical conductivity can be obtained. Further, a volume resistance value for the electrically conductive coating film of the present embodiment is less than 30 $\mu\Omega\cdot$cm.

**Example**

Hereafter, the electrically conductive ink of the present invention and the method for producing an electrically conductive coating film of the present invention (a base material having an electrically conductive coating film) are further explained with examples and comparative examples, but the present invention is not limited to these examples at all.

<<Preparation Example 1>>

Chlorauric acid tetrahydrate (manufactured by Wako Pure Chemical Industries, Ltd.) was dissolved into water, and 6.8 L of $1.1 \times 10^{-3}$ mol/L of gold ion solution was prepared. Further, 0.42 g of mercaptopropionic acid (manufactured by Wako Pure Chemical Industries, Ltd.) was dissolved into 800 mL of water, and 1.0 mL of 10 N NaOH aqueous solution was added and a mercaptopropionic acid aqueous solution was prepared. Further, 0.75 g of sodium borohydride (manufactured by Wako Pure Chemical Industries, Ltd.) was dissolved into 400 mL of water and a sodium borohydride aqueous solution was prepared.

Next, after the mercaptopropionic acid aqueous solution was added to the gold ion solution and the mixture is stirred, 2.4 mL of 10N NaOH aqueous solution was added. In addition, the sodium borohydride aqueous solution was added to this mixture and the mixture was stirred, and a metal colloid liquid 1 (gold colloid liquid) was prepared. The obtained gold colloid liquid was filtered using an ultrafiltration membrane with 50,000 of molecular weight cutoff (manufactured by ADVANTEC MFS, INC.), and impurity ions were removed. The weight reduction (i.e., a content of the organic constituents) at 100 ° C to 500 °C upon thermogravimetric analysis at a temperature-increasing rate of 10 °C/min with regard to a solid content of the gold colloid liquid was 3 % by weight.

«Preparation Example 2»

Chlorauric acid tetrahydrate (manufactured by Wako Pure Chemical Industries, Ltd.) was dissolved into water, and 9.0 L of $5.4 \times 10^{-4}$ nol/L of gold ion solution was prepared. Further, while this gold ion solution was stirred by a homogenizer, 7.0 g of trisodium citrate dehydrate (manufactured by Wako Pure Chemical Industries, Ltd.) in 1 L of boiled water was poured in, and a gold colloid liquid 2 was obtained. The obtained gold colloid liquid was filtered using an ultrafiltration membrane with 50,000 of molecular weight cutoff (manufactured by ADVANTEC MFS, INC.), and impurity ions were removed. The weight reduction (i.e., a content of the organic constituents) at 100 ° C to 500 °C upon thermogravimetric analysis at a temperature-increasing rate of 10 °C/min with regard to a solid content of the gold colloid liquid was 2 % by weight.

«Preparation Example 3»

After 11.72 mmol of monoethanolamine and 3.975 mmol of pyrogallol were dissolved into 128 mL of ion exchange water, 2 mL of an aqueous solution containing 5.89 mmol of silver nitrate was added, and the mixture was stirred at room temperature for 1 hour using a magnetic stirrer. After stirring, the mixture was refined by dialysis until the nitrate ion concentration in the solution became less than 100 ppm, and a metal colloid liquid 3 (silver colloid liquid) was prepared. The weight reduction at 100 °C to 500 °C upon thermogravimetric analysis at a temperature-increasing rate of 10 °C/min with regard to a solid content of the obtained silver colloid liquid was 2 % by weight.

«Preparation Example 4»

After 80 g of 60 mM chlorauric acid tetrahydrate (manufactured by Wako Pure Chemical Industries, Ltd.) aqueous solution was poured into a reaction container, 320 g of distilled water and 13.1 g of 4 % sodium citrate aqueous solution were added, and these were reacted at 78 °C for 30 minutes. The gold concentration in the solution at this time was approximately 500 ppm. After the reaction completed, 39.8 g of 30 % polyvinylpyrrolidone (PCP K-15, molecular weight: 10,000) solution was added, and then, 24.0 g of 5 % sodium dodecyl sulfate aqueous solution was added and a thick bluish-violet metal colloid liquid 4 (gold colloid liquid) was obtained. The weight reduction at 100 °C to 500 °C upon thermogravimetric analysis at a temperature-increasing rate of 10 °C/ min with regard to a solid content of the obtained gold colloid liquid was 2 % by weight.

«Experimental Examples 1 to 22»

As shown in Table 1 and Table 2, any one of the metal colloid liquids 1 to 4 obtained as described above and an amine compound shown in Table 1 were mixed, and the ion exchange water was added to the obtained mixture and an adjustment of the final solid content was made to be 40 % by weight, and electrically conductive inks 1 to 22 were obtained. Next, these electrically conductive inks 1 to 22 were applied onto a slide glass with a brush and coating films were formed, respectively, and conductive coatings 1 to 22 were formed by heating and baking in a Geer oven under conditions at 150 °C for 1 hour , respectively.

[Evaluation test]

(1) Median diameter and dispersant stability of electrically conductive ink particles

Median diameter of particles contained in the electrically conductive inks 1 to 22 was measured under conditions using the method above, respectively. Further, the dispersing stability of the electrically conductive inks 1 to 22 was evaluated visually and via a particle diameter measurement using a dynamic light scattering method. A rate of increase of the median diameter two weeks later from the preparation of the electrically conductive ink at less than 15 % was evaluated as "1", and that at 15 % or greater was evaluated as "2" and the ink where particles were obviously resulted in a precipitate was evaluated as "3". These results are shown in Table 1 and Table 2, respectively.

(2) Electrical conductivity of electrically conductive coating film

In order to evaluate the conductivity of the obtained electrically conductive coating films 1 to 22, volume resistance values for the conductive coatings 1 to 22 were measured using a direct-current accurate measuring instruments "mobile double bridge 2769". Specifically, based upon the expression below, the volume resistance value was converted from distance between measuring terminals and thickness of the conductive coating. The volume resistance value at less than 30 $\mu\Omega \cdot$ cm was evaluated as "1", and that at 30 $\mu\Omega \cdot$ cm or greater was evaluated as "2". The results are shown in Tables 1 and 2.

$$\text{Expression: (volume resistance value } \rho v) =$$

$$(\text{resistance value } R) \times (\text{coating width } w) \times (\text{coating thickness } t) / (\text{distance}$$

$$\text{between terminals } L)$$

Furthermore, the conductive coating thickness t was obtained using the following expression (furthermore, it is also possible to measure the conductive coating thickness t with a laser microscope (for example, laser microscope VK-9510 manufactured by Keyence)):

$$\text{Expression: } \boldsymbol{t = m / (d \times M \times w)}$$

$\boldsymbol{m}$: weight of electrically conductive coating film (measurement of weight of the electrically conductive coating film formed on a slide glass)
$\boldsymbol{d}$: density of electrically conductive coating film (g/cm$^3$) (19.3 g/cm$^3$ in the case of gold)
$\boldsymbol{M}$: length of electrically conductive coating film (cm) (measurement of length of the electrically conductive coating film formed on a slide glass in a scale equivalent to JIS 1 class)
w: width of electrically conductive coating film (cm) (measurement of width of the electrically conductive coating film formed on a slide glass in a scale equivalent to JIS 1 class)

(3) Re-solubility of electrically conductive ink

The electrically conductive inks 1 to 22 were applied at 0.5 $\mu$L on a slide glass using a micro syringe, and then, they were left at room temperature for 24 hours or for 2 weeks, and test coating films for re-solubility test 1 - 22 were obtained. Two to three drops of ion exchange water were instilled onto these test coating films 1 to 22 using a Pasteur pipette, respectively, and re-solubility was evaluated with a visual observation. The test coating film having re-solubility even two weeks later was evaluated as "1"; the test coating film having the re-solubility 24 hours later but no re-solubility 2 weeks later was evaluated as "2"; when the test coating film for the re-solubility test partially remained, it was evaluated as "3"; and when the test coating film for the re-solubility test was hardly dissolved, it was evaluated as "4". The results are shown in Table 1 or Table 2.
Table 1

| | Example No. | Composition of electrically conductive ink, etc. | | | | Evaluation test results | | | | | | | |
|---|---|---|---|---|---|---|---|---|---|---|---|---|---|
| | | Metal colloid | Added amine compound | Other additive (s) | Amount of amine compound *1 | Volume resistance value $\mu\Omega\cdot cm$ | Conductivity evaluation | Re-solubility evaluation | Median diameter nm | | Rate of increase of median diameter % | Presence of precipitation with visual observation | Dispersing stability evaluation |
| | | | | | | | | | After preparation | 2 weeks later | | | |
| Example 1 | 1 | 1 | Diglycol amine | | 1.5 | 23 | 1 | 1 | 42.4 | 43.1 | 1.7 | No | 1 |
| Example 2 | 2 | 1 | N-aminoethylethanolamine | | 1 | 17 | 1 | 1 | 45.3 | 47.3 | 4.4 | No | 1 |
| Example 3 | 3 | 1 | N-methyldiethanolamine | | 2 | 29 | 1 | 1 | 39.8 | 42.4 | 6.5 | No | 1 |
| Example 4 | 4 | 1 | N,N-diethylethanolamine | | 50 | 13 | 1 | 2 | 24.6 | 26.9 | 9.3 | No | 1 |
| Example 5 | 5 | 1 | 1-dimethylamino-2-propanol | | 14 | 15 | 1 | 2 | 30.1 | 31.2 | 3.7 | No | 1 |
| Example 6 | 6 | 1 | 2-dimethylaminoethanol | | 14 | 16 | 1 | 2 | 28.9 | 29.7 | 2.8 | No | 1 |
| Example 7 | 7 | 1 | Isopropanolamine | | 10 | 26 | 1 | 2 | 32.4 | 33.2 | 2.5 | No | 1 |
| Example 8 | 8 | 1 | 3-morpholinopropylamine | | 1.5 | 27 | 1 | 2 | 41.5 | 41.9 | 1.0 | No | 1 |
| Example 9 | 9 | 1 | 4-aminopyridine | | 1.5 | 29 | 1 | 2 | 43.6 | 45.9 | 5.3 | No | 1 |
| Example 10 | 10 | 1 | 3-ethoxypropylamine | | 14 | 27 | 1 | 2 | 31.4 | 32.5 | 3.5 | No | 1 |
| Example | 11 | 1 | Ethylenediamine | | 14 | 28 | 1 | 2 | 28.0 | 29.1 | 3.9 | No | 1 |

Table 2

| | Example No. | Composition of electrically conductive ink, etc. | | | | Evaluation test results | | | | | | | |
| | | Metal colloid | Added amine compound | Other additive (s) | Amount of amine compound *1 | Volume resistance value μΩ·cm | Conductivity evaluation | Re-solubility evaluation | Median diameter nm | | Rate of increase of median diameter % | Presence of precipitation with visual observation | Dispersing stability evaluation |
| | | | | | | | | | After preparation | 2 weeks later | | | |
| Example 12 | 12 | 1 | triethylenetetramine | | 0.7 | 28 | 1 | 2 | 45.3 | 46.1 | 1.8 | No | 1 |
| Example 13 | 13 | 1 | N-aminoethylethanolamine | | 0.3 | 11 | 1 | 2 | 47.3 | 50.3 | 6.3 | No | 1 |
| Example 14 | 14 | 2 | Diglycolamine | | 1.5 | 28 | 1 | 1 | 43.9 | 48.9 | 11.4 | No | 1 |
| Example 15 | 15 | 2 | N-aminoethylethanolamine | | 1 | 26 | 1 | 1 | 45.3 | 49.1 | 8.4 | No | 1 |
| Example 16 | 16 | 1 | N-aminoethylethanolamine | Polyethylene glycol *2 | 1 | 25 | 1 | 1 | 49.2 | 55.4 | 12.6 | No | 1 |
| Comp. Ex. 1 | 17 | 1 | None | | 0 | 10 | 1 | 4 | 50.4 | 60.8 | 20.6 | No | 2 |
| Comp. Ex. 2 | 18 | 1 | N-aminoethylethanolamine | | 0.1 | 11 | 1 | 3 | 48.1 | 53.3 | 10.8 | No | 1 |
| Comp. Ex. 3 | 19 | 1 | N-aminoethylethanolamine | | 65 | > 100 | 2 | 1 | 27.1 | 29.0 | 7.0 | No | 1 |
| Comp. Ex. 4 | 20 | 1 | None | 1-3 propanediol *3 | 0 | 24 | 1 | 3 | 54.3 | 634.7 | 1068.9 | Yes | 3 |
| Comp. Ex. 5 | 21 | 3 | Use monoethanolamine as dispersant | | 2 *4 | > 100 | 2 | 4 | 10.9 | 11.8 | 8.3 | No | 1 |
| Comp. Ex. 6 | 22 | 4 | Use PVP as dispersant | | 2 *4 | > 100 | 2 | 4 | 32.5 | 33.2 | 2.2 | No | 1 |

*1: An amount of the amine compound is an amount of the added amine compound with regard to a solid content weight of the metal colloid liquid (% by weight).
*2: As polyethylene glycol, 5 % by weight of one with 200 of molecular weight was added.
*3: 20 % by weight of 1,3- propanediol was added.
*4: This was approximated with weight reduction at 100 °C to 500 °C at the time of a thermogravimetric analysis at a temperature-increasing rate of 10 °C/ min regard to a solid content.

As it is obvious from the results shown in Table 1 and Table 2, if the electrically conductive ink of the present invention is used, it becomes ascertained that the electrically conductive coating film having sufficient electrical conductivity can be formed even if the electrically conductive ink is baked by heating at low temperature, and the electrically conductive ink excelling in the dispersing stability and the re-solubility can be obtained. Further, according to the present invention, a base material having an electrically conductive coating film including the electrically conductive coating film having superior conductivity can be provided.

Furthermore, the inventors of the present application verified that the amine compound is dispersed in the electrically conductive ink of the present invention using the method below. In other words, at first, the electrically conductive ink was treated in a centrifuge and most of metallic particles settled out and were isolated from a clear supernatant liquid. At this time, the higher the concentration of the metallic particles in the electrically conductive ink was, the clearer whether or not the metallic particles settled out became (30 % by weight or greater was desirable). For the conditions for centrifugal, it was more preferable when the gravitational acceleration was greater, and it was more preferable when the time period was longer. When the extracted clear supernatant liquid was analyzed with an infrared spectroscopic analysis or mass analysis, a peak derived from the added amino compound appeared intensely; in the meantime, a peak was hardly detectable from the metallic particles. Therefore, it became ascertained that the amino compound is not adsorbed onto the metallic particles, but is dispersed in the electrically conductive ink.

Industrial Applicability

The electrically conductive ink obtained from the present invention has the same level or greater of dispersibility compared to the conventional one and has superior low-temperature baking property, dispersant stability and re-solubility, and in addition, an electrically conductive coating film having the same level or greater conductivity compared to the conventional one can be formed from the electrically conductive ink of the present invention. In other words, the electrically conductive ink of the present invention can be prepared to be high concentration, and it is easy to form a coating film from the electrically conductive ink of the present invention, and it is possible to obtain an electrically conductive coating film exhibiting high electrical conductivity by baking by heating at low temperature. With this characteristic, as a base material where the electrically conductive ink of the present invention is applied, it is possible to apply and bake the electrically conductive ink onto a resin base material with low heat resistance, such as PET or polyimide, in addition to glass. Further, since the electrically conductive ink of the present invention has re-solubility, it is advantageous for work efficiency at the time of maintenance, such as printability or cleaning in various printing methods.

The electrically conductive ink of the present invention can be preferably used, for example, as a conductive material for forming a solar cell panel lead, an electrode of a flat panel display, a circuit substrate or an IC card lead; an electromagnetic wave shielding coating agent for a through-hole or a circuit itself, a cathode-ray tube or a plasma display; an infrared ray shielding coating agent for building materials or vehicles; a static electricity antistatic agent for electronic instruments or mobile phones; a hot-lead coating agent for opaque glass; and a coating agent for adding conductivity to a resin material.

**Claims**

1. Electrically conductive ink comprising:

   a metal colloid liquid comprising metal particles and organic constituents, the organic constituents containing a hydrophilic group and a metal-adsorbing group and being at least partially localized on surfaces of the metal particles due to the metal-adsorbing group; and
   a stabilizer comprising an amino compound having one or more amino groups and being dispersed in the metal colloid liquid.

2. The electrically conductive ink in accordance with claim 1, containing the amine compound at between 0.2 % by weight and 60 % by weight of a solid content of the metal colloid liquid.

3. The electrically conductive ink in accordance with claim 1 or 2, wherein
   the amine compound contains N-aminoethylethanolamine, diglycolamine, N-methyldiethanolamine, diethanolamine, N-butyldiethanalamine, 4-aminomethylpyridine γ-butyrolactone, 2,2'-methyliminodiethanol, 3-morpholinopropylamine, 2-(1-piperazinyl)ethylamine, 2-pyridinecarbaldehyde, γ-valerolactone, 2-(isopenthyloxy)ethanol, N,N-diethylethanolamine, triethylenetetramine, 1-dimethylamino-2-propanol, tripropylene glycol, 2-dimethylaminoethanol, triisopropanolamine, 3-ethoxypropylamine, ethylenediamine, 2-(dimethylamino)ethyl methacrylate, pentylamine, isopropanolamine, diethylmethylamine, triethylamine, N-methylpiperidine, piperazine, pyrrolidine, diethylaminoethanol, triethanolamine, dimethylaminopropanol, monoethanolamine, 2-(methylamino)ethanol, n-propanolamine, 2-amino-2-methyl-1-propanol, diethylamine, 2-amino-2-methyl-1-propanol, 2-diethylaminoethanol, 2-dimethylaminoisopropanol, 3-diethylamino-1-propanol, 2-dimethylamino-2-methyl-1-propanol, 4-dimethylamino-1-butanol, aminocyclohexane or 3-(dimethylamino)-1-propanol.

4. The electrically conductive ink in accordance with any of claims 1 to 3, wherein
   the hydrophilic group is a carboxyl group; and
   the metal-adsorbing group is a group containing a sulfur atom.

5. The electrically conductive ink in accordance with any of claims 1 to 4, wherein
   the metal colloid liquid is a colloidal gold liquid.

6. The electrically conductive ink in accordance with claim 5, wherein
   the amine compound contains N-aminoethylethanolamine, diglycolamine, N-methyldiethanolamine, N,N-diethylethanolamine, 1-dimethylamino-2-propanol, 2-dimethylaminoethanol, isopropanolamine or 3-morpholinopropylamine.

7. A method for producing a base material having an electrically conductive coating film, including: a base material, and an electrically conductive coating film at least partially formed on a surface of the base material, comprising:

   an electrically conductive ink application step of applying the electrically conductive ink in accordance with any of claims 1 to 6 onto a base material; and
   an electrically conductive coating film forming step of baking the electrically conductive ink applied onto the base material at a temperature of 300 °C or lower to form an electrically conductive coating film.

8. The method for producing a base material having an electrically conductive coating film according to claim 7, wherein the electrically conductive coating film is formed by baking the electrically conductive ink applied on the base material at a temperature of lower than 200 °C in the conductive coating forming step.

<table>
<tr><td colspan="2" align="center">**INTERNATIONAL SEARCH REPORT**</td><td colspan="2">International application No.<br>PCT/JP2010/003882</td></tr>
</table>

A. CLASSIFICATION OF SUBJECT MATTER
*C09D11/00*(2006.01)i, *H01B1/22*(2006.01)i, *H01B13/00*(2006.01)i

According to International Patent Classification (IPC) or to both national classification and IPC

B. FIELDS SEARCHED

Minimum documentation searched (classification system followed by classification symbols)
C09D11/00, H01B1/22, H01B13/00

Documentation searched other than minimum documentation to the extent that such documents are included in the fields searched
Jitsuyo Shinan Koho            1922-1996    Jitsuyo Shinan Toroku Koho    1996-2010
Kokai Jitsuyo Shinan Koho     1971-2010    Toroku Jitsuyo Shinan Koho    1994-2010

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2009-099518 A (Mitsuboshi Belting Ltd.),<br>07 May 2009 (07.05.2009),<br>claims; paragraphs [0021] to [0022], [0025] to [0043], [0075]<br>(Family: none) | 1-8<br>4 |
| X<br>Y | JP 2009-097074 A (Mitsuboshi Belting Ltd.),<br>07 May 2009 (07.05.2009),<br>claims; paragraphs [0021] to [0022], [0025] to [0049], [0062]<br>(Family: none) | 1-8<br>4 |
| Y | JP 2009-120718 A (Seiko Epson Corp.),<br>04 June 2009 (04.06.2009),<br>claims; paragraphs [0022] to [0024], [0065] to [0066]<br>(Family: none) | 4 |

☒ Further documents are listed in the continuation of Box C.      ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>04 August, 2010 (04.08.10) | Date of mailing of the international search report<br>17 August, 2010 (17.08.10) |
|---|---|
| Name and mailing address of the ISA/<br>Japanese Patent Office | Authorized officer |
| Facsimile No. | Telephone No. |

Form PCT/ISA/210 (second sheet) (July 2009)

| INTERNATIONAL SEARCH REPORT | | International application No. |
|---|---|---|
| | | PCT/JP2010/003882 |

C (Continuation).  DOCUMENTS CONSIDERED TO BE RELEVANT

| Category* | Citation of document, with indication, where appropriate, of the relevant passages | Relevant to claim No. |
|---|---|---|
| Y | JP 2004-273205 A  (Harima Chemicals, Inc.), 30 September 2004 (30.09.2004), claims; paragraphs [0023] to [0026], [0032], [0038] to [0041] (Family: none) | 4 |
| P,A | JP 2009-256779 A  (The Furukawa Electric Co., Ltd.), 05 November 2009 (05.11.2009), claims; paragraph [0024] (Family: none) | 1-8 |
| P,X | JP 2009-238625 A  (Mitsuboshi Belting Ltd.), 15 October 2009 (15.10.2009), claims; paragraphs [0020] to [0038], [0047] to [0049], [0061] (Family: none) | 1-8 |
| P,A | JP 2009-140884 A  (Seiko Epson Corp.), 25 June 2009 (25.06.2009), claims; paragraphs [0029] to [0031], [0069] to [0070] (Family: none) | 1-8 |

Form PCT/ISA/210 (continuation of second sheet) (July 2009)

**EP 2 444 462 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP H1066861 B
- JP 2005179754 A
- JP 2004273205 A